(19) Europäisches Patentamt

European Patent Office

Office européen des brevets

(11) **EP 4 239 597 A1**

(12) **EUROPEAN PATENT APPLICATION**

(43) Date of publication:
**06.09.2023 Bulletin 2023/36**

(21) Application number: **23155621.8**

(22) Date of filing: **08.02.2023**

(51) International Patent Classification (IPC):
**G06V 20/56** (2022.01)      **G06V 20/10** (2022.01)

(52) Cooperative Patent Classification (CPC):
**G06V 20/56; G06V 20/188**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.03.2022 GB 202202831**

(71) Applicant: **AGCO International GmbH
8212 Neuhausen am Rheinfall (CH)**

(72) Inventors:
• **MUJKIC, Esma
  8930 Randers (DK)**
• **CHRISTIANSEN, Martin Peter
  8930 Randers (DK)**

(74) Representative: **AGCO Intellectual Property
Department
AGCO Limited
Abbey Park Stoneleigh
Kenilworth CV8 2TQ (GB)**

(54) **MONITORING AGRICULTURAL OPERATIONS**

(57)     Methods and systems are provided for monitoring operation of an agricultural machine. Image data indicative of an input image of a working environment of the agricultural machine is receive and encoded utilising an encoder network to map the image data to a lower-dimensional feature space. The encoded data is then decoded form a reconstructed image of the working environment which is compared with the input image to identify anomalies within the working environment. One or more operable components associated with the machine may be controlled based on the identification of one or more anomalies.

FIG. 1

EP 4 239 597 A1

**Description**

**CROSS-REFERENCE TO RELATED APPLICATIONS**

Not applicable.

**FIELD**

Embodiments of the present disclosure relate generally to systems and methods for monitoring operation of an agricultural machine within a working environment.

**BACKGROUND**

It is crucial to be able to detection and ultimately avoid obstacles within an agricultural working environment. To date, operator assistance systems have been provided which may detect and alert an operator of a machine to the presence of obstacles for the operator to then take action to avoid collisions. Moving forward, such systems could also be incorporated into machines with autonomous capabilities, where preemptive action may be taken automatically on the detection of one or more obstacles.

Known systems may utilise object detection algorithms. However, such systems require intensive training prior to being released to be able to detect and classify a predefined set of obstacles. Such training requires a significant number of image examples from each class of objects. Therefore such training is usually limited to the most common classes of objects that may be encountered in the environment (other vehicles, humans, implements, poles, bales, etc.). However, such environments are highly unstructured, and a lot of unforeseen objects may be encountered. By not accounting for all possible objects, such object detection algorithms may potentially result in obstacles and other objects not being identified. For operator assistance systems this may increase the workload for the operator and lead to a lower trust by the operator in the effectiveness of the system. For automated systems, this may pose potential collision issues. Therefore, it would be beneficial to provide a system which can detect anything unusual in the environment.

It would be advantageous to provide a system (and associated method) which overcomes or at least partly mitigates one or more problems associated with the prior art systems.

**BRIEF SUMMARY**

In an aspect of the invention there is provided a control system for monitoring operation of an agricultural machine, the control system comprising one or more controllers, and being configured to: receive image data indicative of an input image of a working environment of the agricultural machine; encode the image data utilising an encoder network to map the image data to a lower-dimensional feature space; decode the encoded data to form a reconstructed image of the working environment; compare the reconstructed image with the input image; and generate and output one or more control signals for controlling operation of one or more operable components associated with the machine in dependence on the comparison.

Advantageously, the present solution overcomes issues associated with known object detection systems which require significant additional training with multiple different images illustrating multiple different objects. This is particularly useful in agricultural working environments where the environment is highly unstructured with many unforeseen objects potentially arising which may not have been accounted for on training the object detection system. The present solution additionally requires a lower computational power compared with object detection systems trained on a predetermined set of object classes.

The one or more controllers may collectively comprise an input (e.g. an electronic input) for receiving one or more input signals. The one or more input signals may comprise the image data. The one or more controllers may collectively comprise one or more processors (e.g. electronic processors) operable to execute computer readable instructions for controlling operational of the control system, for example, to encode and/or decode the data. The one or more processors may be operable to generate one or more control signals for controlling operation of the one or more operational components. The one or more controllers may collectively comprise an output (e.g. an electronic output) for outputting the one or more control signals.

The control system may be configured to compare the reconstructed image with the input image to generate an anomaly map. The control system may be configured to generate and output one or more control signals for controlling operation of the one or more operable components associated with the machine in dependence on the generated anomaly map.

The control system may be operable to determine a reconstruction error for the reconstructed image. For example, the control system may be operable to determine a loss function in generating the anomaly map. In some embodiments, in generating the anomaly map the control system may be configured to calculate, pixel-wise, a relative perceptual loss between the input image and the reconstructed image.

The control system may be configured to determine a pixel anomaly score for each pixel within the reconstructed image. The pixel anomaly score for each pixel may be compared with a threshold pixel anomaly score to classify each pixel, e.g. as normal or abnormal. The control system may be configured to determine an image anomaly score in dependence on the determined pixel anomaly scores. For example, the control system may be configured to compare the image anomaly score with a threshold anomaly score for the image. The control system may be configured to determine the presence of an anomaly within working environment in dependence on the comparison. This may include determining the presence of an anomaly within the working environment in dependence on the image anomaly score exceeding the threshold anomaly score, for example.

The control system may be configured to utilise an autoencoder architecture for encoding the received image data and decoding the encoded data. The autoencoder architecture may include an encoder network and a decoder network. The autoencoder architecture may be trained utilising a training dataset. The training dataset may comprise a 'normal' dataset comprising image data relating to images obtained during 'normal' operation of the agricultural machine within a working environment. When used herein and throughout the specification, the term 'normal' operation may relate to operation where no anomalies or obstacles are present within the working environment of the machine.

The one or more operable components may comprise a user interface associated with the machine. The user interface may be a display screen within an operator cab, for example, or a display screen on a remote device such as a smartphone or tablet computer carried by an operator of the machine. The control system may be operable to present, on the user interface, a representation of the anomaly map to the operator to inform the operator of a detected anomaly within the working environment of the machine. The representation may include an overlay on an image presented to the operator indicating the relative position of a detected anomaly with respect to the machine.

Additionally or alternatively, the one or more operable components may comprise one or more functional components of the machine. This may include a steering system and/or propulsion system of the machine. For example, the control system may be configured to control operation of the steering system and/or the propulsion system for automating motion of the machine in dependence on the comparison of the reconstructed image with the input image. This may include controlling operation of the propulsion system of the machine to reduce an operating speed of the machine in dependence on the identification of an anomaly within the working environment of the machine. This may include controlling operation of the steering system of the machine to guide the machine along an operational path which avoids the location of the detected anomaly within the working environment of the machine.

The control system may be operable to receive the input image data from one or more image sensors mounted or otherwise coupled to the agricultural machine. The one or more image sensors may comprise a camera, such as an RCG camera or the like. The one or more image sensors may additionally or alternatively comprise transceiver type sensors, which may include LIDAR sensors, RADAR sensors, ultrasonic sensors and the like.

The anomaly(ies) may comprise one or more objects or obstacles for the agricultural machine. This may include a human or animal present in the working environment. This may include one or more poles, implements or bales in the working environment, for example. This may include other working vehicles. It may include areas which cannot be traversed by the machine, such as waterlogged areas within the working environment or areas with a build up of residue or other material.

A further aspect of the invention provides an operator assistance system for an agricultural machine, comprising: one or more image sensors; and the control system of the preceding aspect of the invention.

The one or more image sensors may comprise a camera, such as an RCG camera or the like. The one or more image sensors may additionally or alternatively comprise transceiver type sensors, which may include LIDAR sensors, RADAR sensors, ultrasonic sensors and the like.

The system may comprise a user interface for displaying a representation of an anomaly map to an operator of the machine as determined by the control system.

A further aspect of the invention provides an agricultural machine comprising the control system or the operator assistance system of any preceding aspect of the invention.

The agricultural machine may comprise a harvesting machine, which may be a combine harvester, for example.

The agricultural machine may comprise a tractor, or other working machine. The agricultural machine may comprise one or more implements mounted or otherwise coupled thereto for performing an appropriate operational task. The one or more sensors may be mounted on the machine and/or on the implement.

The agricultural machine may comprise a roadside cutting machine.

A further aspect of the invention provides a method of monitoring operation of an agricultural machine, comprising: receiving image data indicative of an input image of a working environment of the agricultural machine; encoding the image data utilising an encoder network to map the image data to a lower-dimensional feature space; decoding the encoded data to form a reconstructed image of the working environment; comparing the reconstructed image with the input image; and controlling operation of one or more operable components associated with the machine in dependence on the comparison.

The method may comprise performing any one or more of the functionalities of the control system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

## BRIEF DESCRIPTION OF THE DRAWINGS

One or more embodiments of the invention / disclosure will now be described, by way of example only, with reference to the accompanying drawings, in which:

FIG. 1 is a schematic view of a control system;
FIG. 2 is a schematic view illustrating aspects of the present invention;
FIG. 3 is a flowchart illustrating an embodiment of a method of the present invention;
FIG. 4 is a schematic representation of an autoencoder network utilised in embodiments of the present invention;
FIG. 5 is a performance comparison of different autoencoder models against a baseline method;
FIG. 6 illustrates the distribution of normal and abnormal samples in a test set demonstrating the operational use of the present invention;
FIG. 7 illustrates the operational output from various embodiments of the invention for an example scenario; and
FIG. 8 is a comparison of the operational output from an embodiment of the invention in an example scenario with a baseline method.

## DETAILED DESCRIPTION

The present invention, in general, relates to systems and methods for monitoring an agricultural operation in a working environment. As discussed herein, image data is received indicative of an input image of a working environment of an agricultural machine. The image data is encoded utilising an encoder network, trained on normal training data, to map the image data to a lower-dimensional feature space, before being decoded, e.g. utilising a decoder network to form a reconstructed image of the working environment. The reconstructed image is then compared with the input image, and a measure of the success of that reconstruction may be obtained. Where there is a high level of reconstruction error it may be determined that there is an anomaly within the input image, such as an obstacle etc. within the working environment of the machine. One or more operable components associated with the machine are then controlled in dependence on the comparison, as is described herein.

Background

Agricultural environments are dynamic, unstructured and diverse environments. Supervised algorithms such as object detection and semantic segmentation are trained to detect objects from a predefined set of classes. As such, these algorithms need a substantial amount of training data (e.g. training images) for each class they are trained for. Because of this, such systems are typically limited to detection and classification of only the most common classes of objects expected to be encountered in a working environment (e.g. a field). While such approaches may be critical for solving higher-level tasks such as scene understanding and autonomous navigation, they do not provide a complete solution for general operation due to their inability to detect unknown objects, i.e. those objects falling into classes on which the system hasn't been trained. On the other hand, self-supervised approaches such as anomaly detection are trained to look for patterns that don't conform to normal operating conditions. Therefore, they are able to detect all objects in the field that pose a potential issue and need to be treated as obstacles.

In the agricultural context, all objects in the field that are a potential obstruction to machine and/or pose a collision risk should be treated as anomalies. The anomalies would include humans, other machines present in the field, building structures, and various other objects left in the field intentionally or unintentionally.

As discussed herein, in embodiments of the present invention, an autoencoder method is used. An autoencoder network comprises two parts, an encoder and a decoder. The encoder network maps the input data onto a low-dimensional feature space, while the decoder attempts to recover the data from the projected low-dimensional space. The encoder and decoder are trained together with reconstruction loss functions to minimise the reconstruction error between the input and reconstructed images. Accordingly, using normal data to train the autoencoder forces the model to learn to reconstruct normal data instances from low-dimensional feature spaces with low reconstruction error. Since anomalies deviate from normal data instances, they are more difficult to be reconstructed from the same low-dimensional feature space and have higher reconstruction error. Therefore, the present invention utilises this reconstruction error to identify anomalies within the environment and optionally generate anomaly maps therefrom, e.g. for assisting an operator of the associated machine.

Control system

As discussed herein, a control system 10 is configured for controlling one or more operational components 32, 35 associated with an agricultural machine 50, such as a combine harvester or tractor or the like. In the illustrated embodiment, the controllable operational components include a guidance system 35 of a harvester 50 for controlling motion of the harvester 50 in dependence on an identification of an obstacle/anomaly within the working environment of the harvester 50, determined in the manner discussed herein, and a user interface 32 associated with the combine harvester 50, e.g. provided as a display terminal of the harvester 50 or indeed a handheld terminal, e.g. to provide a representation of an generated anomaly map or position of an object/obstacle with respect to the harvester 50 to an operator the harvester 50.

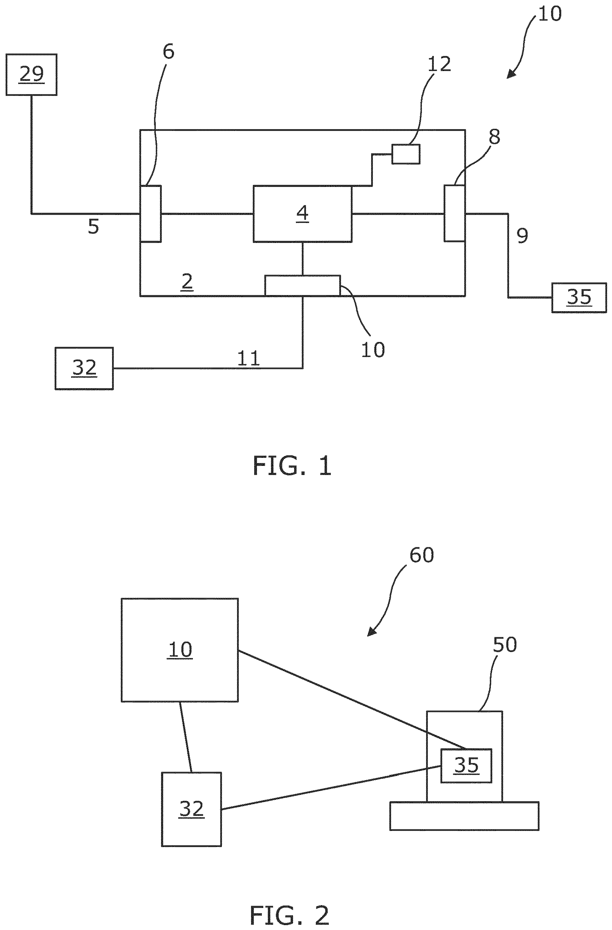

FIG 1 illustrates the control system 10 further. As shown, control system 10 comprises a controller 2 having an electronic processor 4, an electronic input 6 and electronic outputs 8, 10. The processor 4 is operable to access a memory 12 of the controller 2 and execute instructions stored therein to perform the steps and functionality of the present invention discussed herein, e.g. by controlling the user interface 32, to indicate, e.g. to an operator of the harvester 50, information indicative of the presence and/or position of an object/obstacle within the environment of the harvester 50, and/or controlling operation of the harvester 50 through generation and output of one or more control signals to a guidance system 35 thereof.

The processor 4 is operable to receive via input 6 which, in the illustrated embodiment, takes the form of input signals 5 received from a sensing system 29, image data indicative of indicative of an input image of a working environment of an the harvester 50. For instance, the sensing system 29 can include one or more image sensors such as cameras or the like operable to obtain images of the working environment of the harvester 50. In some embodiments, the sensor(s) are mounted or otherwise coupled to the harvester 50 and obtain said image(s) as the harvester 50 moves through the environment.

Utilising the image data from the sensing system 29, the processor 4 is configured to analyse the image data and determine therefrom the presence and/or position of one or more objects within the working environment of the harvester. Specifically, and as discussed in detail herein, the processor 4 is operable to encode the image data utilising an encoder network to map the image data to a lower-dimensional feature space and then decode the encoded data to form a reconstructed image of the working environment. Through comparison of the reconstructed image with the original image anomalous data can be identified, specifically where the encoder/decoder network has failed to correctly reconstruct the image, e.g. due to the presence of an unknown object within the vicinity of the harvester 50.

As described above, the controller 2 includes an electronic output 8 configured to output control signals 9 generated by the processor 4 for controlling operation of the harvester 50. Specifically, processor 4 is operable to generate, and the controller 2 operable to then output via output 8, control signals 9 to a guidance system 35 of the harvester 50 for controlling motion of the harvester 50, e.g. through control over a steering system and/or a propulsion system of the harvester 50. This may include controlling an operational speed of the harvester 50 (e.g. reducing the forward speed of the harvester 50) and/or determining a guidance path for avoiding the location of the detected object/anomaly. As will be appreciated, the controller 2 may output the control signals 9 to a local processing unit, e.g. a control unit of the guidance system 35 for controlling operation thereof.

Output 110 is operably coupled to a user interface 32 associated with the harvester 50. As will be appreciated and is discussed herein, the user interface 32 may form part of a portable device, such as a phone or tablet computer, and/or may form part of a display screen within an operator cab of the harvester 50. Here, the control system 10 is operable to control operation of the user interface 32, e.g. through output of control signals 11 in order to display data to an operator of the harvester 50 relating to the operation of the control system 10. Specifically, the control system 10 is operable to control the user interface 35 to display to the operator a representation of an anomaly map (or the like) indicating the presence and/or position of an identified object/anomaly with respect to the harvester 50. Together this may form a guidance or assistance system for the operator.

<u>System</u>

FIG.2 illustrates a system 60 embodying aspects of the invention. The system 60 comprises a distributed system with control system 10 (discussed hereinabove) shown remote from but in communication with the user interface 32 and harvester 50. In this embodiment, the remote control system 10 may be housed on a remote server or cloud based system and operable to communicate with the user interface 32 and/or harvester 50 over a wireless communication network. In alternative arrangements, the control system 10 may form part of the processing system(s) of the harvester 50 itself. Further, as described herein, the user interface 32 may form part of a display system of the harvester 50.

<u>Method</u>

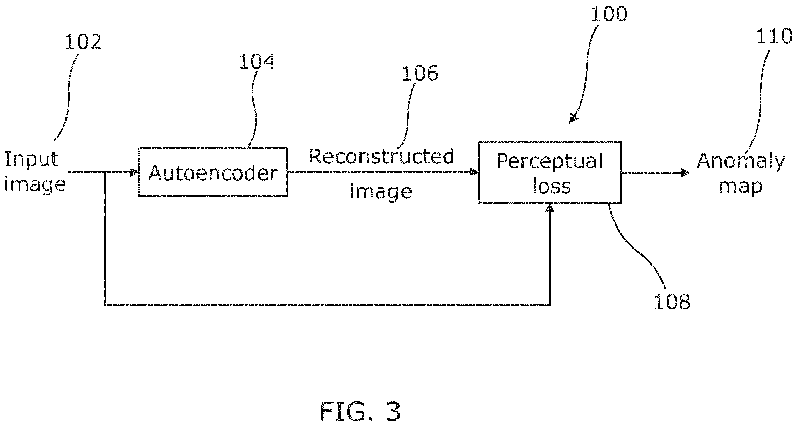

FIGs. 3 - 8 illustrate embodiments and experimental data illustrating the operational use of aspects of the invention.

An outline of an embodiment of a method 100 is illustrated in FIG 3. In step 102, image data indicative of an input image of a working environment of the harvester 50 is received. In step 104, the input image data is analysed utilising an autoencoder method whereby the image data is first encoded utilising an encoder network to map the image data to a lower-dimensional feature space before subsequently decoding the encoded data utilising a decoder network to form a reconstructed image of the working environment (step 106). As explained herein, the autoencoder is trained on normal training data. At step 108, the reconstructed image is compared with the input image, here specifically by determined a measure of a perceptual loss between the images. In the illustrated embodiment, an anomaly map is then generated based on the determined perceptual loss. This can then be presented to an operator, e.g. through user interface 32, or used to automate control over one or more operable component of the harvester 50, such as the guidance system 35 as described herein.

<u>Experimental Data</u>

A - Datasets

Multiple autoencoder models were used, specifically here a basic autoencoder (AE), a Vector Quantised-Variational Autoencoder (VQ-VAE) and a Denoising Autoencoder (DAE). In the following summary, these methodologies were compared with a baseline model, specifically a YOLOv5 method for object detection.

In order to train and evaluate all the models, several datasets were required as listed in the table 1. Images in the datasets for training and evaluation of autoencoders are resized to 160x800. In the datasets for training and evaluation of the baseline model, images are resized to 128x640. Each dataset is described in more detail below.

*Normal dataset:*

The training of AE and VQ-VAE requires a dataset with images depicting normal operating conditions. The dataset consists of 2344 images collected over 9 days of summer harvest in Denmark.

*Synthetic dataset:*

On the other hand, training of DAE requires image pairs of an image with anomalies and its normal equivalent. One way of creating such a paired dataset is to have a dataset with annotated objects and use the object mask to add those objects synthetically to normal images. In this way, training of DAE, in addition to the dataset with normal images, requires an annotated dataset of anomaly objects at the pixel level. The previously described normal dataset was used as the set of background scenes. A separate annotated dataset, collected along with the normal dataset, has been used to extract the objects that present obstacles and, in this context, anomalies. The placement of the object in the new background scene is kept the same as in the original image. Finally, the Gaussian blur with 5x5 kernel is used to blend the object into the scene and avoid boundary artifacts.

*Object detection dataset:*

For training of baseline model, dataset annotated for box-based object detection was used. The dataset consists of 7.9k images collected by two agricultural vehicles during 13 days. The annotated classes are: tractor, combine, combine header, grain wagon, square bale, person, and car.

*Test dataset:*

The annotated test dataset consists of 1432 images in total. Out of those images, 476 images represent normal data, and 956 images are images with objects collected on the same days as the normal dataset. In addition, the images are annotated with nonoverlapping instance segmentation and bounding boxes.

TABLE 1: Overview of datasets used for the training of autoencoders and baseline models

| Model | Training dataset | Evaluation dataset |
|---|---|---|
| AE | Normal dataset | Test dataset (normal data + abnormal data) with pixel level annotations |
| VQ-VAE | Normal dataset | |
| DAE | Synthetic dataset (normal data + segmentation masks of objects) | |
| YOLOv5s | Object detection dataset with bounding box annotation | Test dataset (normal data + abnormal data) with bounding box annotations |

B - Architectures

*AE:*

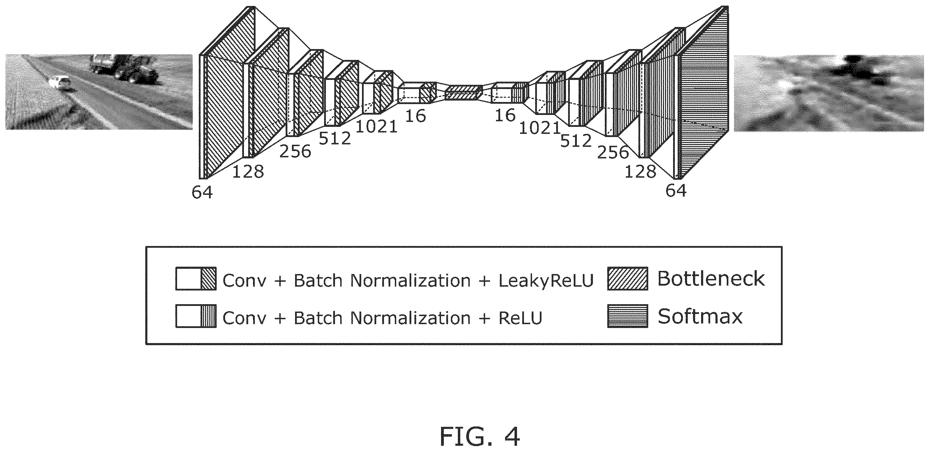

In order to reconstruct normal data and use reconstruction error as an anomaly score, a basic autoencoder model was trained. The architecture of the network is illustrated in FIG. 4. The model consists of an encoder network that compresses input data, latent space and a decoder network that reconstructs data back from compressed representation. The encoder network has 6 convolutional layers with increasing filters (64, 128, 256, 512 and 1024). The decoder network corresponds to the encoder with 6 convolutional layers with decreasing number of filters (1024, 512, 256, 128, 64). The 13 encoder network and decoder network share a bottleneck with 16 channels. Each convolutional layer, with the exception of the final layer, is followed by batch normalization and LeakyReLu as activation function. The final convolutional layer is followed by softmax activation. The autoencoder is trained using images from a normal dataset. Mean squared error (MSE) between the input image and predicted image has been used as a loss function. The anomaly map is generated by calculating relative-perceptual-L1 between the input image and reconstructed image.

*VQ-VAE:*

The VQ-VAE architecture is also trained using the normal dataset. Afterwards, all images from normal training datasets are encoded using the trained VQ-VAE to collect a latent code set, and the probability distribution of this latent code set is estimated using Gated-PixelCNN. At the prediction stage, the model yields two output images. The first image is the reconstructed image decoded from the original latent set. Then, when the latent code of an input image is out of the distribution learned in the second step, Gated-PixelCNN will conduct resampling operations on it. Finally, the resampled latent code is decoded as a restored image, which is used for anomaly detection by calculating the relative-perceptual-L1 loss with the directly reconstructed image.

*DAE:*

The denoising autoencoder has the same architecture as the basic autoencoder, i.e. 6-layer encoder and a 6-layer decoder that share a bottleneck having 16 channels. However, here, the input data presented to the network are images with anomalies, and the targets are the corresponding images without anomalies. The loss function used for training is MSE between the target and predicted images. In this way, the autoencoder network learns to remove anomalies from the input image. The anomaly map is generated by calculating relative-perceptual-L1 between the input and predicted images with anomalies removed.

*Baseline Model:*

The lightest model version of YOLOv5, YOLOv5s, was chosen as the baseline model. The model is a single-stage object detector and consists of a backbone network, neck and detection head. The Cross-Stage-Partial-connections (CSP) backbone network is used to extract features from the input image. The layers in the neck of the network are inserted to collect feature maps from different stages. This enables the model to perform better when detecting objects of various sizes and scales. In YOLOv5, PANet is used as neck networks to get feature pyramids. The standard YOLO head is used to perform the final detection part. It applies anchor boxes on features and generates final output vectors with class probabilities, objectness scores, and bounding boxes. In YOLOv5s, the Leaky ReLU activation function is used in hidden layers, while the final detection layer uses the sigmoid activation function.

C - Anomaly Map Generation

As discussed herein, embodiments of the invention include the calculation of a pixel anomaly score for each pixel in the reconstructed image and/or an image anomaly score for the entire reconstructed image. In the illustrated embodiment, the anomaly scores for each pixel and anomaly map are calculated by relative-perceptual-L1 loss. Specifically, a VGG19 network, pretrained on an ImageNet dataset for the object classification task, is applied to the input image and the reconstructed image. Then, the obtained deep features of hidden layers are normalized by the mean and standard deviation of filter responses, precalculated on ImageNet. The L1-norm is calculated between the normalized features and divided by the average values of these features. For example, if f(x) is the feature map obtained from a hidden layer of the network applied to image x. Then:

$$\tilde{f}(x) = \frac{f(x) - \mu}{\sigma} \qquad (1)$$

is the normalized feature map where $\mu$ and $\sigma$ are precalculated mean and standard deviation of filter responses. The relative-perceptual-L1 loss is between image x and y is then defined as

$$L(x, y) = \frac{\left\| \tilde{f}(x) - \tilde{f}(y) \right\|_1}{\left\| \tilde{f}(x) \right\|_1} \qquad (2)$$

Here, the loss is determined from outputs of the second convolutional layers of 5 convolutional blocks in VGG19.

D - Anomaly Score per Image

After obtaining the anomaly map, anomaly scores for each pixel are classified as normal or abnormal in order to identify the areas with anomalies. Here, this comprises comparing the anomaly score for each pixel with a suitable threshold value (to be determined).

In order to do this, anomaly maps of images from the test set are thresholded by a range of threshold values. Then, the thresholded anomaly maps are compared with a ground truth, and the threshold that yields the maximum mean IoU with the ground truth is selected.

The total anomaly score for the image is calculated as the percentage of pixels with an anomaly score above the threshold value. This anomaly score is used to optimize the F1 score on the test set and determine the corresponding threshold for classifying images as normal or abnormal. The determined threshold values for the present scenario are listed in table 2.

TABLE 2: Anomaly thresholds for autoencoder anomaly maps

| Model | Anomaly map threshold | mIoU | Anomaly score threshold |
|---|---|---|---|
| AE | 1.3 | 0.63 | 0.0019 |
| VQ-VAE | 1.1 | 0.63 | 0.001 |
| DAE | 1.2 | 0.64 | 0.004 |

Results

Each model was evaluated against the annotated dataset according to its ability to classify an image as anomalous or not. For autoencoders, anomaly scores are computed for each image and images are classified for various thresholds. For the baseline model, if objects are detected in an image, it is classified as anomalous.

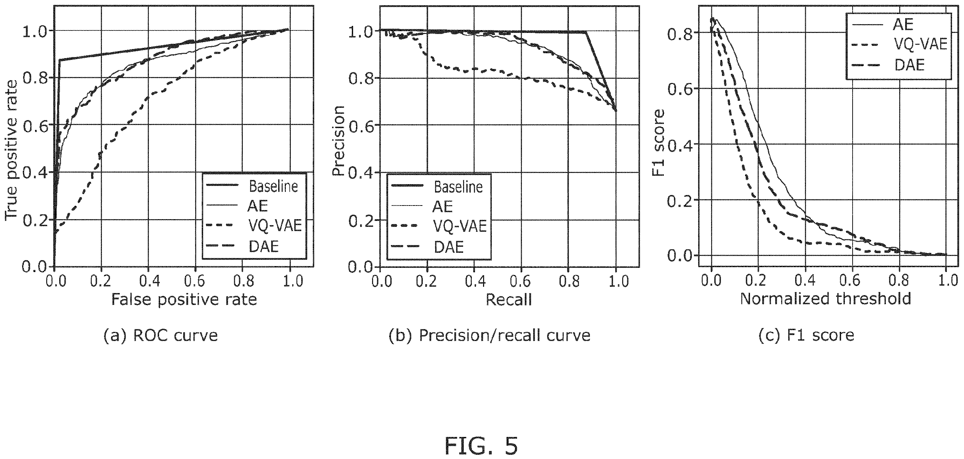

A receiver operating characteristic (ROC) curve, precision/recall curve, and F1 score are generated for each model (FIG. 5). Furthermore, the models' performances are measured using the maximum F1 score, the area under the curve for ROC curve (ROC AUC) and the area under the curve for precision/recall curve (PR AUC). The results can be seen in table 3.

TABLE 3: Comparison of three autoencoder models AE, DAE, VQ-VAE and baseline YOLOv5s models

| Model | F1 Score | ROC AUC | PR AUC |
|---|---|---|---|
| AE | 0.8474 | 0.8527 | 0.9255 |
| VQ-VAE | 0.8113 | 0.7080 | 0.8262 |
| DAE | 0.8520 | 0.8669 | 0.9310 |
| YOLOv5s | 0.9278 | 0.9273 | 0.9736 |

As shown, the baseline model was shown to give the highest performance scores on all three metrics, with the DAE model having the highest performance scores from the autoencoder models, followed by AE and VQ-VAE.

The ROC curve and precision/recall curve (FIG. 5) show that AE and DAE demonstrate similar performance, while VQ-VAE performed significantly worse.

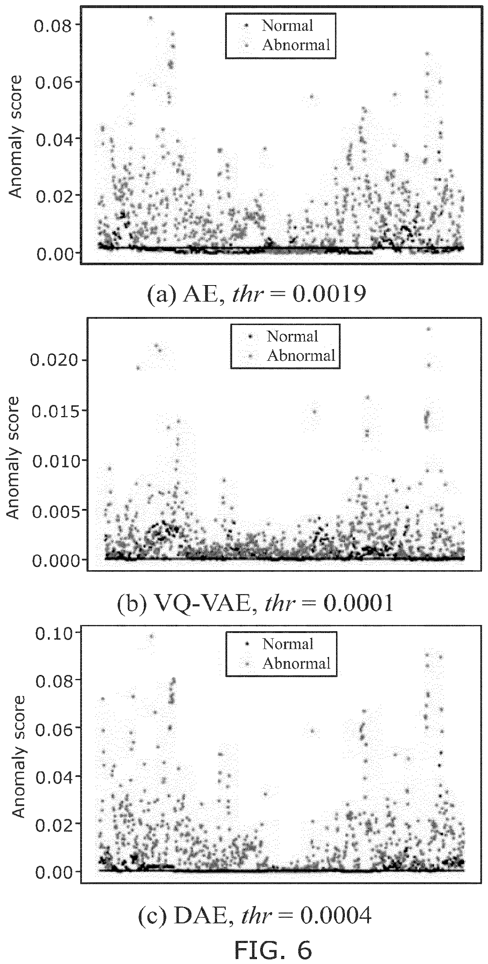

The distribution of normal and abnormal samples in the test dataset is shown in FIG. 6. In the figure, blue dots correspond to normal samples, orange dots correspond to abnormal samples, and red lines represent the thresholds found by optimizing the F1 score. For a good anomaly detector, normal samples should be placed below the threshold line and abnormal samples above the threshold line. It has been shown that VQ-VAE has troubles classifying normal and abnormal samples since the anomaly scores of significant number of those samples fall within the same range. However, abnormal samples have higher anomalies scores in general. On the other hand, AE and DAE have good ability of distinguishing between normal and abnormal samples. In both cases, majority of normal samples is below threshold and majority of abnormal samples is above threshold.

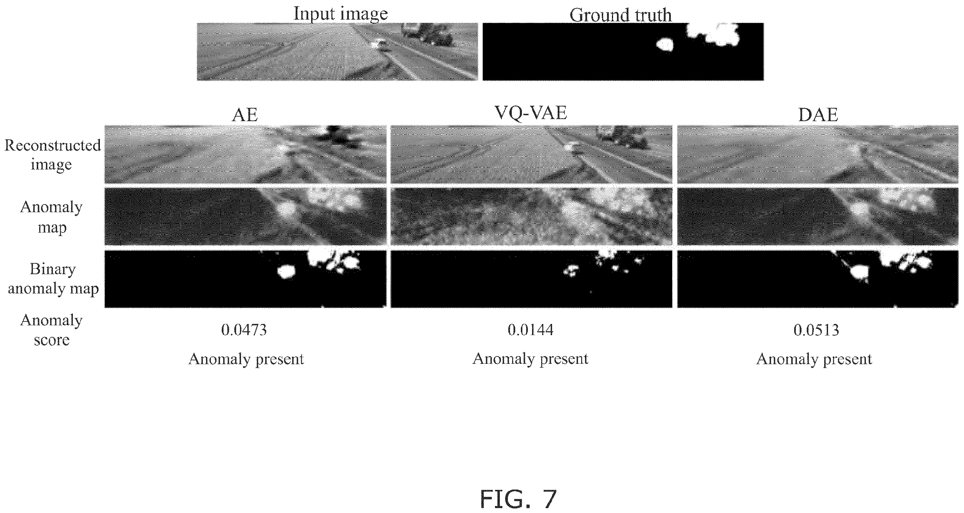

The qualitative performance of the autoencoder models is illustrated in FIG. 7. The example image is captured by a camera mounted on the front of the harvester 50 during operation in the field. In this scenario, a tractor with a trailer and a car are potential obstacles in the harvester's path and should be detected as anomalies by the system. The reconstruction images show that the different autoencoders were able to reconstruct the images as expected. Specifically, the AE and VQ-VAE models reconstructed anomalies poorly, while DAE is able to remove the anomalies from the image. The anomaly maps of AE and DAE show the anomalies clearly. On the other hand, the anomaly map generated by VQ-VAE had some additional noise. The anomaly scores are above the threshold for all three autoencoders, indicating that the image would be correctly classified as anomalous in all cases.

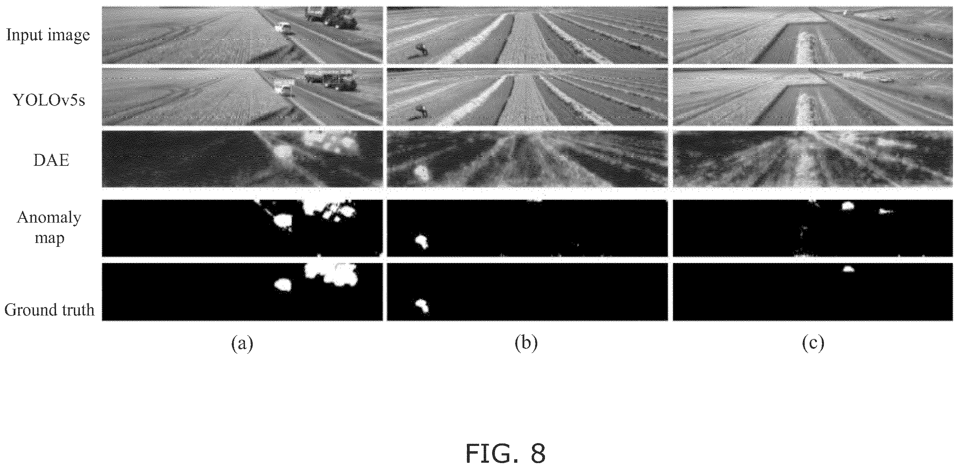

Comparing anomaly detectors with the baseline YOLOv5 model, it has been shown that AE and DAE have similar precision/recall curve and PR AUC. One major difference between the anomaly detectors and object detector is that anomaly detectors do not provide class labels for the detected objects. Further, and as discussed herein another major difference is the requirements for the training dataset. AE and VQ-VAE require only normal data that doesn't need to be annotated. DAE requires annotated masks for objects, which can be time-consuming. Although object detectors provide class labels for anomalous objects, they require a large amount of data for each object class. Given that the agricultural fields are highly unstructured environments, it is unrealistic to collect enough data for each object that could potentially be found in a field. For example, FIG. 8c shows a header trailer that has not been included as a class for annotation in training of the baseline model. Accordingly, utilising YOLOv5s the header trailer cannot be detected as an object, but DAE did detect it as an anomaly. Moreover, FIG. 8b shows a scenario where YOLOv5s failed to detect a person because of its body position. In the same scenario, DAE was able to detect a person as an anomaly successfully.

It has therefore been shown that the by utilising an anomaly detection regime rather than an object detection regime, the present invention is able to identify a greater variety of potential obstacles to the machine in its working environment when compared with known object-specific detection systems.

All references cited herein are incorporated herein in their entireties. If there is a conflict between definitions herein and in an incorporated reference, the definition herein shall control.

**Claims**

1. A control system for monitoring operation of an agricultural machine, the control system comprising one or more controllers, and being configured to:

   receive image data indicative of an input image of a working environment of the agricultural machine;
   encode the image data utilising an encoder network to map the image data to a lower-dimensional feature space;
   decode the encoded data to form a reconstructed image of the working environment;

compare the reconstructed image with the input image; and
generate and output one or more control signals for controlling operation of one or more operable components associated with the machine in dependence on the comparison.

2. A control system as claimed in claim 1, configured to compare the reconstructed image with the input image to generate an anomaly map.

3. A control system as claimed in claim 2, configured to generate and output one or more control signals for controlling operation of the one or more operable components associated with the machine in dependence on the generated anomaly map.

4. A control system as claimed in claim 2 or claim 3, wherein in generating the anomaly map the control system is configured to calculate, pixel-wise, a relative perceptual loss between the input image and the reconstructed image.

5. A control system as claimed in claim 4, configured to: determine a pixel anomaly score for each pixel within the reconstructed image; and determine an image anomaly score in dependence on the determined pixel anomaly scores.

6. A control system as claimed in claim 5, configured to:

compare the image anomaly score with a threshold anomaly score; and
determine the presence of an anomaly within working environment in dependence on the comparison.

7. A control system as claimed in claim 6, configured to determine the presence of an anomaly within the working environment in dependence on the image anomaly score exceeding the threshold anomaly score.

8. A control system of any preceding claim, configured to utilise an autoencoder architecture for encoding the received image data and decoding the encoded data.

9. A control system of any preceding claim, wherein the one or more operable components comprise a user interface associated with the machine.

10. A control system as claimed in claim 9, when dependent on claim 2 or any claim dependent thereon, operable to present, on the user interface, a representation of the anomaly map to the operator to inform the operator of a detected anomaly within the working environment of the machine; optionally wherein the representation comprises an overlay on an image presented to the operator indicating the relative position of a detected anomaly with respect to the machine.

11. A control system as claimed in any preceding claim, wherein the one or more operable components comprises a steering system and/or propulsion system of the machine for automating motion of the machine in dependence on the comparison of the reconstructed image with the input image.

12. A control system as claimed in claim 11, configured to control operation of the propulsion system of the machine to reduce an operating speed of the machine in dependence on the identification of an anomaly within the working environment of the machine.

13. A control system as claimed in claim 11 or claim 12, configured to control operation of the steering system of the machine to guide the machine along an operational path which avoids the location of the detected anomaly within the working environment of the machine.

14. An operator assistance system for an agricultural machine, comprising:

one or more image sensors; and
the control system of any preceding claim.

15. A method of monitoring operation of an agricultural machine, comprising:

receiving image data indicative of an input image of a working environment of the agricultural machine;

encoding the image data utilising an encoder network to map the image data to a lower-dimensional feature space;

decoding the encoded data to form a reconstructed image of the working environment;

comparing the reconstructed image with the input image; and

controlling operation of one or more operable components associated with the machine in dependence on the comparison.

EP 4 239 597 A1


FIG. 1

FIG. 2

FIG. 3

FIG. 4

(a) ROC curve

(b) Precision/recall curve

(c) F1 score

FIG. 5

(a) AE, *thr* = 0.0019

(b) VQ-VAE, *thr* = 0.0001

(c) DAE, *thr* = 0.0004

FIG. 6

FIG. 7

EP 4 239 597 A1

FIG. 8

Europäisches
Patentamt

European
Patent Office

Office européen
des brevets

# EUROPEAN SEARCH REPORT

Application Number

EP 23 15 5621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/374440 A1 (YAMANAKA MASAO [JP]) 2 December 2021 (2021-12-02) * paragraph [0002] - paragraph [0003] * * paragraph [0007] - paragraph [0009] * * paragraph [0013] * * paragraph [0030] - paragraph [0038] * * figures 2-5 * | 1-15 | INV. G06V20/56 G06V20/10 |
| X | GASPARINI RICCARDO ET AL: "Anomaly Detection, Localization and Classification for Railway Inspection", 2020 25TH INTERNATIONAL CONFERENCE ON PATTERN RECOGNITION (ICPR), IEEE, 10 January 2021 (2021-01-10), pages 3419-3426, XP033910112, DOI: 10.1109/ICPR48806.2021.9412972 [retrieved on 2021-04-22] * the whole document * | 1-15 | |
| X | WANG TIANGE ET AL: "A Deep Generative Approach for Rail Foreign Object Detections via Semisupervised Learning", IEEE TRANSACTIONS ON INDUSTRIAL INFORMATICS, IEEE SERVICE CENTER, NEW YORK, NY, US, vol. 19, no. 1, 8 February 2022 (2022-02-08), pages 459-468, XP011926753, ISSN: 1551-3203, DOI: 10.1109/TII.2022.3149931 [retrieved on 2022-02-09] * the whole document * | 1-15 | TECHNICAL FIELDS SEARCHED (IPC) G06V |

-/--

The present search report has been drawn up for all claims

| Place of search | Date of completion of the search | Examiner |
|---|---|---|
| The Hague | 26 May 2023 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

**EUROPEAN SEARCH REPORT**

Application Number

**EP 23 15 5621**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CREUSOT CLEMENT ET AL: "Real-time small obstacle detection on highways using compressive RBM road reconstruction", 2015 IEEE INTELLIGENT VEHICLES SYMPOSIUM (IV), IEEE, 28 June 2015 (2015-06-28), pages 162-167, XP033209720, DOI: 10.1109/IVS.2015.7225680 [retrieved on 2015-08-26] * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 26 May 2023 | de Castro Palomares |

EPO FORM 1503 03.82 (P04C01)

page 2 of 2

EP 4 239 597 A1

## ANNEX TO THE EUROPEAN SEARCH REPORT
## ON EUROPEAN PATENT APPLICATION NO.

EP 23 15 5621

26-05-2023

| Patent document cited in search report | | Publication date | Patent family member(s) | | Publication date |
|---|---|---|---|---|---|
| US 2021374440 | A1 | 02-12-2021 | CN | 113743179 A | 03-12-2021 |
| | | | JP | 2021189625 A | 13-12-2021 |
| | | | US | 2021374440 A1 | 02-12-2021 |

EPO FORM P0459